# EUROPEAN PATENT SPECIFICATION

(11) **EP 3 399 293 B1**
(45) Date of publication and mention of the grant of the patent: **16.09.2020**
(21) Application number: 18168169.3
(22) Date of filing: 19.04.2018
(51) Int. Cl.: G01L 5/10, B65H 23/195, D21F 2/00, G01L 5/107, D21G 9/00, B65H 23/04, D21F 7/00

(54) **MEASURING BLOCK FOR FIBRE WEB MACHINE**
MESSBLOCK FÜR EINE FASERBAHNMASCHINE
BLOC DE MESURE POUR MACHINE À BANDE FIBREUSE

(30) Priority: 05.05.2017 FI U20174127 U
(43) Date of publication of application: 07.11.2018
(73) Proprietor: Valmet Technologies Oy, 02150 Espoo (FI)
(72) Inventor: HORSMA-AHO, Simo, 40950 MUURAME (FI); KERVOLA, Harri, 40930 KINKOMAA (FI); SAMPPALA, Jukka, 40530 JYVÄSKYLÄ (FI)
(74) Representative: TBK

(56) References cited:
- WO-A1-01/20286
- GB-A- 2 046 454
- US-A1- 2010 011 883
- US-B1- 6 360 596

## Description

The invention relates to a measuring block for a fibre web machine, which measuring block includes a support piece and a fastening piece, which have been fastened to each other in a pivoting manner by means of a joint, as well as sensor devices, which have been adapted between the support piece and the fastening piece on the measuring block in order to determine the tension of a fabric supported by a roll.

Finnish utility model number 6399 presents an arrangement for the measurement of the tension of a fabric in a fibre web machine. In the arrangement, there is a pivoted measuring block between the frame of the fibre web machine and a roll that supports the fabric, with the measuring block containing sensor devices. The tension of the fabric accomplishes a movement of the measuring block with respect to the pivot point, and the tension of the fabric can be determined from this movement by means of the sensor devices. The measuring block is susceptible to wobble due to the pivoted structure. Moreover, the sensor devices include only one sensor, in which case a failure of the sensor may go unnoticed.

Another known measuring block uses two support points, each with a sensor. In this case, the functioning of the sensor devices can be ensured by comparing the readings of the sensors. In other words, a failure of the sensor devices can be detected, in which case it is possible to avoid any consequential implications. The sensors are, however, placed in separate measuring positions. In this case, each sensor measures a different process variable, or they measure the same process variable, but its different component due to the geometry differences of the support points. These differences impair the reliability of the detection of failure based on the measurement difference. At the same time, it is necessary to make an indirect definition of the measured variable that corresponds to the actual tension, which reduces the accuracy of the measured variable.

In both of the solutions presented, overloading protection has been implemented by means of separate travel stops, which complicates the structure of the measuring block. Moreover, it is necessary to use sensors, which can withstand high stresses. Both of these drawbacks hence increase the manufacturing and operating costs of measuring blocks and enlarge the size of the measuring block.

Further, measuring blocks are known from US 6 360 596 B1, WO 01/20286 A1 and GB 2 046 454 A. The measuring block according to the preamble of claim 1 is known from US 2010/0011883 A1.

The object of the present invention is to accomplish a novel kind of measuring block for a fibre web machine, which measuring block has a simpler structure than earlier but the measuring result of which measuring block is more reliable than earlier.

According to the present invention, the above object is solved with a measuring block having the features of claim 1.

In the measuring block according to the present invention, the sensor devices have been supported in a novel and surprising way. In this case, it is possible to use smaller sensor devices than earlier. At the same time, the measuring block becomes stable, which reduces wobble in the control of the tension of the fabric. Furthermore, the overloading protection is built in, in which case the structure of the measuring block remains simple. Moreover, the measuring block can be located freely in positions with different kinds of geometries without compromising the accuracy or overloading protection of the sensor devices. More generally speaking, the measuring block is a tension measuring device.

The invention is described below in detail by making reference to the enclosed drawings that illustrate an embodiment of the invention, in which:
- Figure 1: shows a drawing in principle of two measuring blocks adapted in the fabric cycles of a fibre web machine,
- Figure 2a: shows a measuring block according to the present invention, viewed from above in a normal loading situation,
- Figure 2b: shows the measuring block of Figure 2a as a side view,
- Figure 3a: shows a measuring block according to the present invention, viewed from above in an overloading situation,
- Figure 3b: shows the measuring block of Figure 3a as a side view.

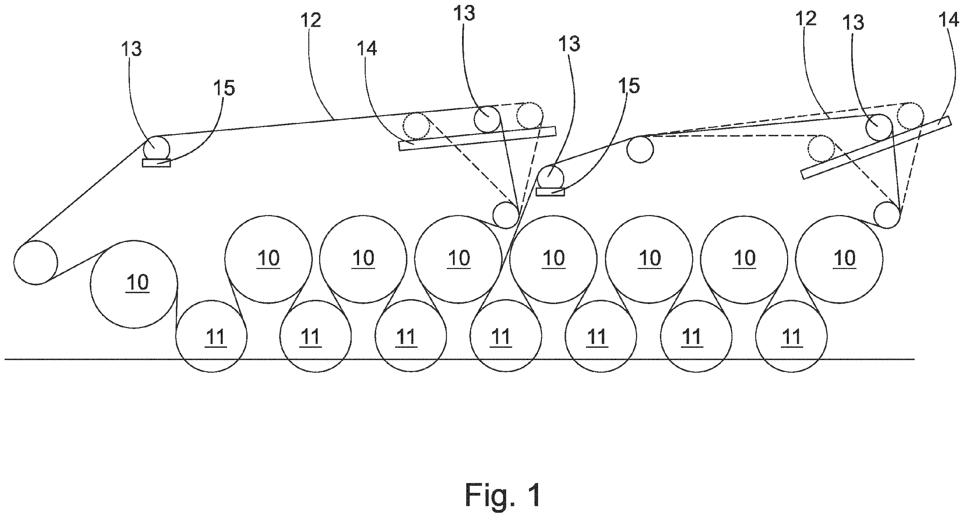

Figure 1 shows part of the dryer section of a fibre web machine. The dryer section consists of several cylinder groups, each of which contains consecutive drying cylinders 10 and turn rolls 11. A fabric cycle consisting of a fabric 12, here a drying fabric, is supported via the drying cylinders and turn rolls. During production, the fibre web is supported by the fabric and taken via the drying cylinders and turn rolls through the dryer section. The fabric cycle is also supported by break back rolls 13, one of which has been equipped here with a fabric stretcher 14. In this case, it is possible to keep the fabric at the desired tension. Moreover, the fabric stretcher can be used for loosening the fabric so that it is possible to change the fabric. The second break back roll 13 is supported by the measuring block 15, and the tension of the fabric 12 can be ascertained from the measurement result of the measuring block 15. The measured tension can then be used for controlling the fabric stretcher. The measuring block can also be used in connection with fabrics other than a drying fabric. As is known, a measuring block of duplexed measurement is installed at both ends of a break back roll, but even with one measuring block according to the invention at one end of the break back roll, it is possible to obtain duplexed measurement results that correspond to the tension of the fabric.

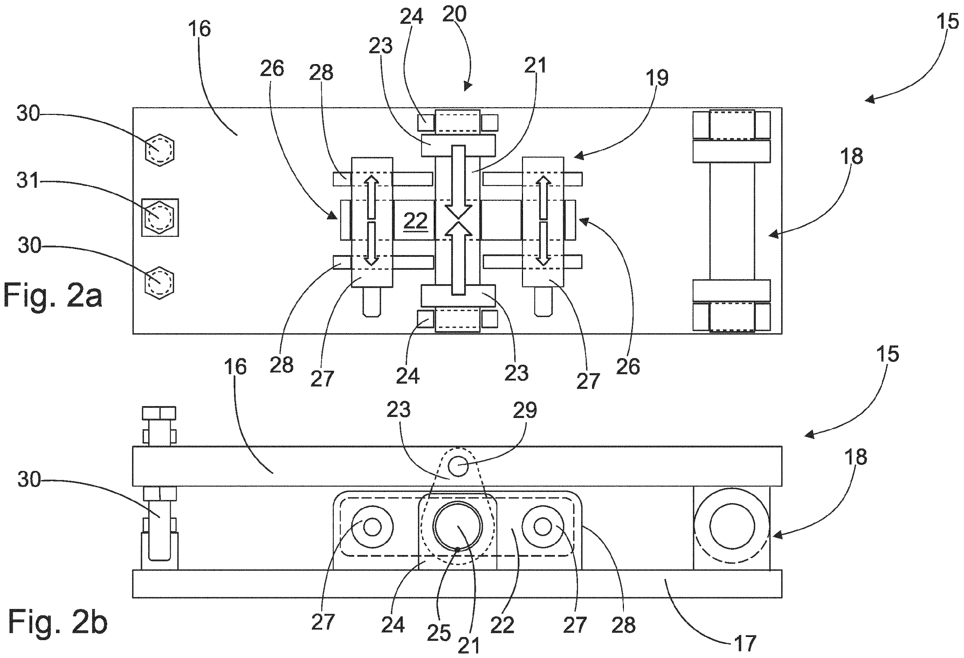

The invention relates to a measuring block for a fibre web machine. The measuring block 15 in different situations is presented in Figures 2a - 3b. The measuring block 15 includes a support piece 16 and a fastening piece 17, which have been fastened to each other in a pivoting manner by means of a joint 18. In this case, the support piece and the fastening piece can pivot with respect to each other. Due to the joint, the movement of the support piece and the fastening piece is sensitive but sturdy. The support piece and the fastening piece are thick metal plate pieces, which can endure stresses without bending. In practice, the fastening piece is fastened to the frame of the fibre web machine, and the bearing pedestal of the break back roll that supports the fabric is fastened to the support piece. The measuring block further includes sensor devices 19, which have been adapted between the support piece 16 and the fastening piece 17 on the measuring block 15 in order to determine the tension of a fabric supported by a roll. The forces caused by the fabric and by the mass of the break back roll are transmitted via the measuring block, in which case it is possible to determine the tension of the fabric from the measurement information of the sensor devices. The tension measurement serves as a control variable for the fabric stretcher, in which case it is possible to keep the fabric at the desired tension. Too loose a fabric can cause flutter, and on the other hand excessive tension can damage the fabric. The age of the fabric also has an impact on tension, as does a change in the production conditions. As an example, the fabric stretches as it becomes older, in which case the break back roll is shifted by using the fabric stretcher, and the desired tension is hence achieved. On the other hand, the fabric warms up in a web break, which can increase tension quite rapidly. In this case, the fabric is loosened to avoid damage.

According to the invention, there is a second support point 20 between the support piece 16 and the fastening piece 17, and the sensor devices 19 have been adapted in connection with the second support point 20. Due to the joint and the support point, the measuring block is sensitive but stable, and the movement of the support piece is small. Moreover, the sensor devices are located only at the support point, in which case the structure of the joint can be simple but robust. At the same time, the placing of the sensor devices is also freer than earlier.

Figure 2a presents the measuring block according to the invention viewed from above, and Figure 2b presents it as a side view. The support point 20 consists of an axle 21, to which a bogie 22, which contains the sensor devices 19, has been supported. The axle is functionally a pivot axle. The axle 21 itself has been supported to the support piece 16 by two upper lugs 23. Due to the bogie 22, the force is transmitted via the upper lugs 23 from the axle 21 to the bogie 22, and this balances the support point. At the same time, the force directed at the sensor devices is reduced, in which case it is possible to use smaller sensor devices than earlier. Moreover, the bogie structure equalises the force directed at the sensor devices, in which case the sensor devices function as planned.

The axle 21 here is a deflecting axle, which has been supported in a floating manner, here to the fastening piece 17. In other words, in a normal situation the force is transmitted from the support piece via the axle to the bogie, but in an overloading situation the deflecting axle deflects, whereby the force is transmitted directly to the fastening piece. The axle of the bogie hence constitutes in itself overloading protection without extra structures and external structures. The arrows at the axle 21 in Figure 2a illustrate the transmission of the force from the upper lugs 23 to the axle 21. Correspondingly, the narrower arrows illustrate the transmission of the halved force from the bogie 22 to the fastening piece 17.

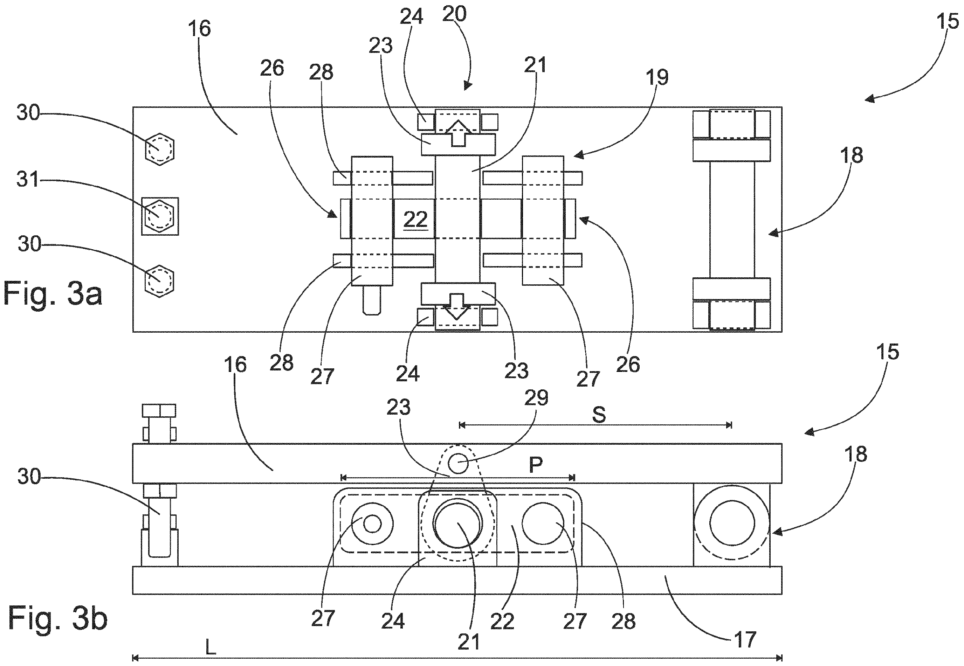

From the sensor devices arranged in the bogie, the force is transmitted to the fastening piece. When the force reaches the maximum force permitted for the sensor devices, the deflection of the axle 21 removes the clearance 25 that has been arranged between the axle 21 and the lower lug 24 of the fastening piece 17. In this case, the force that exceeds the permitted maximum force is transmitted from the axle directly to the fastening piece. This is illustrated by the arrows in Figure 3a. The clearance 25 has been implemented simply by a boring in the lower lug 24, which boring is slightly larger than the axle 21 (Figure 2b). In this case, the clearance is symmetrical, whereby the restriction of the force works irrespective of the direction of the force. The measuring block may hence be subject to either pulling or compression. Correspondingly, the sensor devices function irrespective of the direction of the force. In this case, the measuring block can be placed in a position where the fabric tension pulls the support piece and the fastening piece apart from each other. The measuring block can also be installed upside down or turned 90 degrees, whereby, depending on the position, it is possible to make the measuring range of the sensor devices correspond to the actual load.

In the embodiment presented, the bogie 22 includes two end points 26, and the sensor devices 19 have been adapted in one of them or both of them. The bogie is advantageously symmetrical, whereby a force of the same magnitude is directed at both end points. When using an asymmetrical bogie, the magnitudes of the forces are on a ratio to the distances. In this case, the structure of the measuring block can be adapted to the measuring range of the sensor devices by the selection of the end point. The sensor devices 19 include a pin sensor 27, with which the end point 26 has been supported to the fastening piece 17. In this case, the pin sensor is also the part that fastens the bogie to the fastening piece, and it serves as a joint, which simplifies the structure of the measuring block. The fastening piece 17 contains a fastening support 28 for the pin sensor. The bogie 22 is between two fastening supports 28. The structure is low, and the movement of the support piece 16 is small.

With the supporting presented, where the joint is at the end of the measuring block, it is possible to choose the location of the support point freely, and hence influence the functioning of the measuring block. In the embodiment presented, the support point is halfway through the measuring block. More generally expressed, the distance S of the support point 20 from the joint 18 is 25 - 75% of the length L of the measuring block. The dimensions of the bogie can also be changed. In a symmetrical bogie, the length primarily influences the sensitivity of the bogie structure. The shorter the bogie distance, the more sensitive the bogie structure. Generally expressed, the length P of the bogie 22 is 10 - 40% of the length L of the measuring block. The dimension lines are in Figure 3b.

In the application of the figures, the bogie 22 is symmetrical, and there is a pin sensor at each end point. In this case, a force of the same magnitude and same direction is directed at both end points. In this case, the sensor devices give essentially the same measurement result, which also corresponds to the value that describes the tension of the fabric. Moreover, duplexed sensor devices are created. In this case, if either pin sensor suddenly gives a measurement result that differs from an earlier result, it is immediately obvious that said pin sensor is faulty. In this way, it is possible to ascertain failure without delay, which further increases the reliability of the measuring block.

The force to be measured, directed at the measuring block, is transmitted from the support piece via the joint and the bogie to the fastening piece on a ratio to the distances. In the figures, the support point is centrally, in which case one half of the above-mentioned force comes to the supporting of the bogie. By changing the location of the support point, it is possible to optimise the force to be measured so that it suits the measuring range of the sensor devices, in which case a highly comprehensive variation of measurement applications can be obtained by changing the sensor type.

Here, the symmetrical bogie further equalises the force, in which case the one quarter of the original force that loads the support piece is directed at the end points. In this case, it is possible to use clearly smaller sensor devices than earlier. At the same time, the mechanical structure always transmits the force in a similar manner, which means that the measurement results of the sensor devices can be used for easily determining the actual loading force. The sensor devices have been placed symmetrically on both sides of the axle. In this case, individual pin sensors measure the same force, which is divided in equal proportions on the pin sensors. The same mechanical structure can be used with duplexed sensor devices or without duplexing, by replacing one sensor with a similarly dimensioned pivot pin. Figure 2a shows two pin sensors 27. Figure 3a shows only one pin sensor 27. There is a pivot pin at one end point 26 of the bogie 22.

The fastening piece is fastened to the frame of the fibre web machine. A roll that supports the fabric is fastened in this case to the support piece. The support piece and the fastening piece have been supported to each other by means of a joint. In this case, depending on the tension of the fabric, the tension of the fabric can be determined from the change in the mutual position of the support piece and the fastening piece, by using the sensor devices. The measuring block is often placed in hot circumstances, in which case stresses may occur between the parts due to the temperature differences. The stresses can cause an error in the measuring devices. In the invention, the upper lug 23 has been fastened to the support piece 16 by means of a pivot pin 29. This avoids the transmission of stresses from the support piece to the bogie structure and vice versa.

At the end of the measuring block opposite to the joint 18, there are three bolts 30, 31, which have been screwed into the support piece 16. In this case, the two outermost bolts 30 can be used for enlarging the gap between the support piece and the fastening piece. The bogie structure can hence be relieved, whereby for example the pin sensors can be replaced easily. Correspondingly, the centre bolt 31 can be used for reducing the gap between the support piece and the fastening piece, by pulling with the bolt. This is needed in a situation where the fabric tension pulls the support piece and the fastening piece apart from each other. By pulling with the bolt, the bogie structure can be relieved again, and the pin sensors can hence be replaced.

The figures do not present the fastening counterparts and the protective cover. In practice, the joint, bogie structure and sensor devices are fully protected, which prevents fouling and renders the measuring block service-free. If the sensor devices fail, they can be replaced without dismantling the structure. The measuring block according to the invention accomplishes cost-effective duplexing of the sensor devices. Moreover, the structure of the measuring block is modular. In practice, the same mechanical measuring block functions with or without the duplexing of the sensor devices. Duplexing can be changed easily even after delivery, in either direction. The duplexed sensor devices measure exactly the same force component due to the bogie structure. In this case, it is easy to determine the measurement result. At the same time, there is an internal and simple overloading protection in the measuring block.

## Claims

1. A measuring block for a fibre web machine, which measuring block (15) includes a support piece (16) and a fastening piece (17), as well as sensor devices (19), which are adapted between the support piece (16) and the fastening piece (17) on the measuring block (15) in order to determine the tension of a fabric supported by a roll,
whereby
the support piece (16) and the fastening piece (17) are fastened to each other in a pivoting manner by means of a joint (18), **characterized in that**
there is a second support point (20) between the support piece (16) and the fastening piece (17), and the sensor devices (19) are adapted in connection with the second support point (20), wherein the support point (20) consists of an axle (21), to which a bogie (22), which contains the sensor devices (19), is supported (23), wherein
the bogie (22) includes two end points (26), and the sensor devices (19) are adapted in one of them or both of them, wherein the sensor devices (19) include a pin sensor (27), with which the end point (26) is supported to the fastening piece (17), wherein
two lugs (23) are fastened to the support piece (16) by means of a pivot pin (29), and the axle (21) is supported to the support piece (16) by the two lugs (23).

2. A measuring block according to claim 1, **characterised in that** the axle (21) is a deflecting axle, which is supported in a floating manner to the fastening piece (17) or to the support piece (16), wherein in an overloading situation the deflecting axle deflects, whereby the force is transmitted directly to the fastening piece (17).

3. A measuring block according to claim 1 or 2, **characterised in that** the distance (S) of the support point (20) from the joint (18) is 25 - 75% of the length (L) of the measuring block.

4. A measuring block according to any one of the claims 1 - 3, **characterised in that** the length (P) of the bogie (22) is 10 - 40% of the length (L) of the measuring block.

## Patentansprüche

1. Messblock für eine Faserbahnmaschine, wobei der Messblock (15) ein Tragstück (16) und ein Befestigungsstück (17) hat, wie auch Sensorvorrichtungen (19), die zwischen dem Tragstück (16) und dem Befestigungsstück (17) auf den Messblock (15) angepasst sind, um die Spannung eines durch eine Walze getragenen Stoffs zu bestimmen, wobei das Tragstück (16) und das Befestigungsstück (17) in einer schwenkenden Weise mittels eines Scharniers (18) aneinander befestigt sind, **dadurch gekennzeichnet, dass**
ein zweiter Tragpunkt (20) zwischen dem Tragstück (16) und dem Befestigungsstück (17) vorhanden ist, und die Sensorvorrichtungen (19) in Verbindung mit dem zweiten Tragpunkt (20) angepasst sind, wobei der Tragpunkt (20) aus einer Achse (21) besteht, an der ein Rollenbock (22), der die Sensorvorrichtungen (19) enthält, getragen ist (23), wobei
der Rollenbock (22) zwei Endpunkte (26) hat und die Sensorvorrichtungen (19) in einem oder beiden davon angepasst sind, wobei die Sensorvorrichtungen (19) einen Stiftsensor (27) haben, mit dem der Endpunkt (26) an dem Befestigungsstück (17) getragen ist, wobei
zwei Ösen (23) an dem Tragstück (16) mittels eines Schwenkstifts (29) befestigt sind, und die Achse (21) an dem Tragstück (16) durch die zwei Ösen (23) getragen ist.

2. Messblock nach Anspruch 1, **dadurch gekennzeichnet, dass** die Achse (21) eine ablenkende Achse ist, die in einer schwebenden Weise an dem Befestigungsstück (17) oder dem Tragstück (16) getragen ist, wobei in einer Überlastsituation die ablenkende Achse ablenkt, wodurch die Kraft direkt zu dem Befestigungsstück (17) übertragen wird.

3. Messblock nach Anspruch 1 oder 2, **dadurch gekennzeichnet, dass** der Abstand (S) des Tragpunkts (20) von dem Gelenk (18) 25% bis 75% der Länge (L) des Messblocks beträgt.

4. Messblock nach einem der Ansprüche 1 bis 3, **dadurch gekennzeichnet, dass** die Länge (P) des Rollbocks (22) 10% bis 40% der Länge (L) des Messblocks beträgt.

## Revendications

1. Bloc de mesure pour une machine à bande fibreuse, lequel bloc de mesure (15) comprend une pièce de support (16) et une pièce de fixation (17), ainsi que des dispositifs de capteur (19) qui sont adaptés entre la pièce de support (16) et la pièce de fixation (17) sur le bloc de mesure (15) afin de déterminer la tension d'un tissu supporté par un rouleau,
moyennent quoi :
la pièce de support (16) et la pièce de fixation (17) sont fixées entre elles d'une manière pivotante au moyen d'un joint (18),**caractérisé en ce que** :
il y a un second point de support (20) entre la pièce de support (16) et la pièce de fixation (17), et les dispositifs de capteur (19) sont adaptés par rapport au second point de support (20), dans lequel le point de support (20) se compose d'un essieu (21), sur lequel un bogie (22) qui contient les dispositifs de capteur (19), est supporté, dans lequel :
le bogie (22) comprend deux points d'extrémité (26), et les dispositifs de capteur (19) sont adaptés dans l'un d'entre eux ou dans les deux, dans lequel les dispositifs de capteur (19) comprennent un capteur de broche (27) avec lequel le point d'extrémité (26) est supporté sur la pièce de fixation (17), dans lequel :
deux pattes (23) sont fixées sur la pièce de support (16) au moyen d'une broche de pivot (29), et l'essieu (21) est supporté sur la pièce de support (16) par les deux pattes (23).

2. Bloc de mesure selon la revendication 1, **caractérisé en ce que** l'essieu (21) est un essieu de déviation qui est supporté d'une manière flottante sur la pièce de fixation (17) ou sur la pièce de support (16), dans lequel dans une situation de surcharge, l'essieu de déviation dévie, moyennant quoi la force est transmise directement à la pièce de fixation (17).

3. Bloc de mesure selon la revendication 1 ou 2, **caractérisé en ce que** la distance (S) du point de support (20) par rapport au joint (18) représente de 25 à 75 % de la longueur (L) du bloc de mesure.

4. Bloc de mesure selon l'une quelconque des revendications 1 à 3, **caractérisé en ce que** la longueur (P) du bogie (22) représente de 10 à 40 % de la longueur (L) du bloc de mesure.
